Europäisches Patentamt

European Patent Office

Office européen des brevets

(19)

(11) EP 0 503 714 B1

(12) FASCICULE DE BREVET EUROPEEN

(45) Date de publication et mention
de la délivrance du brevet:
**11.12.1996 Bulletin 1996/50**

(51) Int Cl.6: **C08L 77/06**
// (C08L77/06, 27:16)

(21) Numéro de dépôt: **92200615.0**

(22) Date de dépôt: **03.03.1992**

(54) **Compositions à base de polyamides et objets façonnés à partir de ces compositions**

Polyamidzusammensetzungen und daraus hergestellte Formkörper

Polyamides compositions and shaped article therefrom

(84) Etats contractants désignés:
**BE DE ES FR GB IT SE**

(30) Priorité: **14.03.1991 BE 9100242**

(43) Date de publication de la demande:
**16.09.1992 Bulletin 1992/38**

(73) Titulaire: **SOLVAY (Société Anonyme)**
**B-1050 Bruxelles (BE)**

(72) Inventeurs:
- **Delannoy, Vincent**
  **B-7030 Mons (BE)**
- **D'Heur, Jacques**
  **B-1120 Bruxelles (BE)**

(74) Mandataire: **Nichels, William et al**
**Solvay**
**Département de la Propriété Industrielle**
**Rue de Ransbeek, 310**
**1120 Bruxelles (BE)**

(56) Documents cités:
FR-A- 2 370 081        US-A- 3 125 547

- **PATENT ABSTRACTS OF JAPAN, vol. 8, no. 184 (C-239), 23 août 1984; & JP-A-59 078 261 (KANEGAFUCHI KAGAKU KOGYO K.K.) 07-05-1984**
- **DATABASE WPI, accession no. 75-29586W [18], Derwent Publications Ltd, Londres, GB; & JP-A-50 007 850 (SHOWA DENKO K.K.)**
- **WO-A1-91/05021**

Remarques:
Le dossier contient des informations techniques présentées postérieurement au dépôt de la demande et ne figurant pas dans le présent fascicule.

## Description

La présente invention concerne des compositions à base de polyamides. Elle concerne plus particulièrement des compositions à base de polyamides dont l'aptitude à la mise en oeuvre et notamment au moulage est améliorée. Elle concerne également des objets façonnés à partir de ces compositions.

Les polyamides sont des polymères thermoplastiques connus pour leurs propriétés mécaniques et diélectriques, pour leur résistance aux températures élevées ainsi que pour leur inertie chimique.

Les polyamides semi-aromatiques présentent en outre des propriétés barrière aux gaz qui justifient leur utilisation à une grande échelle dans la fabrication d'emballages plastiques, principalement dans l'emballage des boissons et des denrées alimentaires.

Néanmoins la mise en oeuvre de ces polymères est délicate. On constate en effet, au cours de leur mise en oeuvre en fondu telle qu'effectuée dans les procédés d'extrusion ou d'injection, un encrassement progressif des équipements dû à l'accumulation et/ou à la dégradation de matière au niveau des vis, des fourreaux, des filières et/ou des filtres. Lorsque cet encrassement devient trop important, on peut observer un décrochage anarchique de l'excès de matière qui conduit à l'apparition de défauts dans les objets façonnés. Dans le cas particulier de la mise en oeuvre par extrusion, les encrassements sont localisés le plus souvent au niveau des filtres et ont comme conséquence principale un colmatage progressif de ces derniers. La pression mesurée avant ces filtres croît alors de manière régulière et passé un seuil critique, il est nécessaire d'arrêter la mise en oeuvre de la résine pour procéder au nettoyage complet de l'installation.

Le document FR-A-2370081 décrit des compositions ignifugées à base de polyamide comprenant de 2 à 20 % d'un agent ignifugeant, dont on a empêché le gouttage par adjonction exclusive de polytétrafluoréthylène (PTFE), présent en des quantités de 1 à 5 %.

Le document JP-A-59-078261 décrit une composition ignifugée de matière thermoplastique, notamment à base de polyamide, comprenant de 0.1 à 5 % de polyfluorure de vinylidène (PVDF), de 2 à 30 % d'un agent ignifugeant et de 1 à 20 % d'un agent ignifugeant auxiliaire.

Le document US-A-3125547 décrit des compositions à base de polyoléfines dont l'aptitude à l'extrusion est accrue grâce à l'incorporation de 0.01 à 2 % d'un polymère fluoré.

Le document EP-A-427104 enseigne d'ajouter un polymère fluoré - de préférence du PTFE - à différents polymères en vue d'améliorer leur aptitude à l'extrusion, et en particulier leur tenue au fondu (melt strength) lors d'une mise en oeuvre par extrusion-soufflage. Les compositions ainsi obtenues sont de préférence mises en oeuvre à une température inférieure à la température de fusion du polymère fluoré.

Le document WO-A1-91/05021 décrit deux familles distinctes de compositions, comprenant chacune, outre un polymère (P) difficile à mettre en oeuvre tel qu'un polyamide aliphatique, soit un polymère du tétrafluoréthylène fonctionnalisé par des groupements polaires, soit un mélange d'un polymère fluoré qui soit fluide à la température de mise en oeuvre du polymère P et d'un polymère du tétrafluoréthylène qui soit solide à ladite température.

Les documents EP-A-427104 et WO-A1-91/05021 ne font partie de l'état de la technique qu'au sens de l'article 54(3) de la CBE.

La présente invention vise à remédier aux inconvénients susmentionnés liés à l'encrassement des équipements, et vise dès lors à fournir des compositions à base de polyamides dont l'aptitude à la mise en oeuvre et notamment au moulage est améliorée. Elle concerne à cet effet des compositions de

A) 100 parties en poids de polyamide semi-aromatique choisi parmi les polyamides obtenus par polycondensation de xylylène diamines avec des acides aliphatiques linéaires $\alpha$, $\omega$-dicarboxyliques contenant de 6 à 12 atomes de carbone,

B) de 0,001 à 5 parties en poids de polymère ou copolymère du fluorure de vinylidène, qui soit fluide lorsque le polyamide est à l'état fondu;

C) jusqu'à 10 parties en poids d'additifs choisis parmi les stabilisants, les colorants, les pigments, les agents antistatiques et les agents de nucléation;

D) et éventuellement de 10 à 80 parties en poids d'agents de renforcement fibreux choisis parmi les fibres de verre, les fibres de carbone et les fibres de carbure métallique.

Des exemples de xylylène diamines utilisables sont la m-xylylène diamine et la p-xylylène diamine.

Des exemples d'acides utilisables sont les acides adipique, subérique, sébacique et azélaïque.

On peut également utiliser, dans les compositions selon l'invention, des polyamides dérivés de plus d'une amine et/ou de plus d'un acide, ou des mélanges de polyamides différents.

Les polyamides décrits ci-dessus présentent plusieurs avantages (faible reprise d'eau conférant une bonne stabilité dimensionnelle, rigidité élevée, bonne résistance au fluage, bonnes propriétés diélectriques...); ceci est tout particulièrement vrai pour les polyamides obtenus par polycondensation de m-xylylène diamine avec l'acide adipique (dénommés ci-après MXD6), qui sont préférés.

Les compositions selon l'invention contiennent en outre au moins un agent de mise en oeuvre choisi parmi les polymères et copolymères du fluorure de vinylidène (VF$_2$), qui soit fluide lorsque le polyamide est à l'état fondu. Dès lors il convient qu'il soit fluide à des températures comprises entre 100 et 400°C, de préférence entre 125 et 360°C, plus particulièrement entre 200 et 350°C.

A titre d'exemples de pareils polymères on peut citer le poly(fluorure de vinylidène) (PVDF) ainsi que les copolymères du VF$_2$ avec des oléfines fluorées telles que le copolymères du VF$_2$ avec des oléfines fluorées telles que le fluorure de vinyle, le trifluoréthylène, le chlorotrifluoréthylène, le tétrafluoréthylène, l'hexafluoropropylène, l'hexafluorisobutylène ou les perfluoralkoxy oléfines.

Cet agent de mise en oeuvre est incorporé dans les compositions selon l'invention dans des quantités variables : de 0,001 à 5 parties en poids, de préférence de 0,005 à 1 partie en poids, plus particulièrement de 0,01 à 0,5 partie en poids pour 100 parties en poids de polyamide.

Il va de soi que l'agent de mise en oeuvre peut être introduit dans les compositions selon l'invention sous la forme d'un polymère fluoré unique ou sous la forme d'un mélange de polymères fluorés.

Outre le polyamide et l'agent de mise en oeuvre, les compositions selon l'invention peuvent contenir jusqu'à 10 parties en poids (pour 100 parties en poids de polyamide) d'additifs usuels choisis parmi les stabilisants, les pigments, les colorants et les agents antistatiques. On peut aussi y incorporer un agent de nucléation conventionnel des polyamides tel que du talc et des phosphinates de métaux alcalins et alcalino-terreux. Lorsque le polyamide est le MXD6, un agent de nucléation bien connu est le polyhexaméthylène adipamide (nylon 6:6).

On peut encore incorporer à ces compositions des agents de renforcement fibreux choisis parmi les fibres de verre, les fibres de carbure métallique et les fibres de carbone, les fibres de verre étant particulièrement préférées. Lorsqu'ils sont présents, ces agents de renforcement fibreux sont incorporés dans les compositions selon l'invention dans des quantités comprises entre 10 et 80 parties en poids, de préférence entre 20 et 70 parties en poids, pour 100 parties en poids de polyamide.

La préparation des compositions selon l'invention peut se faire par toutes les méthodes connues de la technique. Un mode opératoire particulièrement simple comprend le mélange à sec dans les proportions souhaitées des différents constituants.

On peut aussi préparer, dans un premier temps, un mélange primaire appelé mélange maître ou "master batch" de polyamide teneur en polymère fluoré dans ce mélange maître est en général comprise entre 0,05 et 25 % en poids, de préférence entre 0,5 et 10 % en poids, plus particulièrement entre 1 et 6 % en poids du mélange. Ce mélange primaire est introduit conjointement avec le polyamide lors du procédé de transformation dans des proportions permettant l'obtention d'une composition selon l'invention.

Les proportions entre les différents constituants de la composition selon l'invention peuvent éventuellement être modifiées au cours de la mise en oeuvre.

Les compositions selon l'invention sont aptes à être mises en oeuvre par tous les procédés classiques de transformation des matières plastiques, et plus particulièrement par les procédés d'extrusion, d'extrusion-soufflage, d'extrusion-thermoformage et d'injection. Ces compositions conviennent pour la fabrication d'objets façonnés tels que des films, des feuilles, des plaques, des récipients, des sacs, des sachets ou des tubes ; ces compositions conviennent très bien pour la fabrication d'objets façonnés destinés plus particulièrement à l'emballage des boissons et des denrées alimentaires, tels que des récipients, des films et des feuilles.

Ces objets façonnés à partir des compositions selon l'invention peuvent présenter des structures monocouches, constituées uniquement des compositions selon l'invention, ou des structures multicouches dont au moins une des couches est à base des compositions selon l'invention, les autres étant choisies parmi d'autres polymères tels que par exemple les polymères de l'éthylène, du propylène, du chlorure de vinyle ou les polyalkènes téréphtalates ou leurs mélanges. La liaison entre les couches constitutives de ces matériaux peut être renforcée par des couches à base de résines adhésives. Des résines connues à cette fin sont par exemple : les polyoléfines modifiées par des monomères polaires, telles que les polymères du propylène et les polymères de l'éthylène greffés d'anhydride maléique ; les copolymères de l'éthylène avec l'acide acrylique ; les ionomères dérivés de sels de métaux alcalins ou alcalino-terreux et de copolymères de l'éthylène avec l'acide acrylique ou avec des acrylates. Dans le cas où l'on souhaite façonner les objets à structure multicouche, on peut utiliser les techniques de coextrusion, de coinjection ou de colaminage.

Un avantage inattendu des compositions selon l'invention est leur bonne aptitude à la mise en oeuvre. On constate en effet lors de leur mise en oeuvre en fondu une très nette diminution de l'encrassement des équipements qui a comme conséquence une amélioration de l'aspect des objets façonnés. En outre, dans le cas particulier de la mise en oeuvre par extrusion, on constate que l'encrassement des filtres est très nettement diminué et que l'on peut mettre en oeuvre en continu de grandes quantités de matière sans que la pression mesurée à ce niveau ne dépasse le seuil critique au delà duquel il faut procéder à l'arrêt et au nettoyage complet de l'installation.

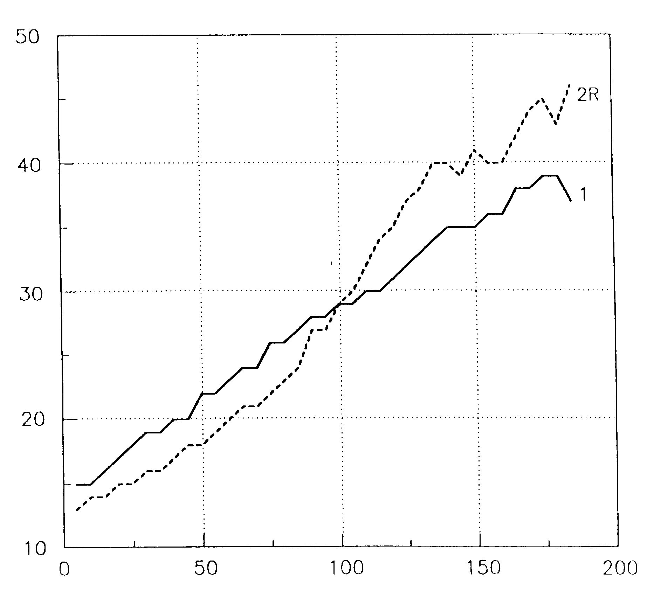

Les exemples suivants en combinaison avec la figure unique annexée à laquelle il est fait référence servent à illustrer l'invention. Cette figure est un diagramme bidimensionnel dans lequel le temps, exprimé en minutes, est représenté en abscisse et la pression d'extrusion, P, exprimée en bars et telle que définie ci-dessous est représentée en ordonnée. Les courbes 1 et 2R sont représentatives des comportements des compositions selon les exemples 1 et 2R.

L'aptitude à la mise en oeuvre des compositions est testée au moyen d'un équipement de laboratoire spécialement conçu pour évaluer les matières plastiques mis au point par la société BRABENDER et constitué par le couplage d'un "extrusiomètre" (modèle 832200) et d'un "filtratest" (modèle 844303). Cet équipement permet de reproduire fidèlement les problèmes de colmatage des filtres rencontrés industriellement lors de l'extrusion d'une composition thermoplastique. Le test consiste à extruder la composition dans l'extrusiomètre équipé d'une vis sans fin de 19 mm de diamètre (D) et de 25*D de long, de reprendre la composition fondue et homogénéisée dans une pompe à engrenages et de forcer son passage à un débit constant au travers d'une plaque à trous et d'une série de filtres.

On mesure en permanence la pression, P (pression d'extrusion, exprimée en bars), avant la série de filtres et on pèse la quantité de matière, Q, extrudée pendant l'essai. Le comportement des polymères est caractérisé par l'évolution de la pression d'extrusion en cours d'essai, par la pression d'extrusion en fin d'essai ainsi que par le paramètre $\Delta p$ défini par la relation ci-dessous :

$$\Delta p = (P_f - P_i).100/P_i.Q$$

dans laquelle

$P_i$ : pression initiale d'extrusion, exprimée en bars ;

$P_f$ : pression d'extrusion en fin d'essai, exprimée en bars ;

Q : quantité totale de matière extrudée au cours de l'essai, exprimée en kg ;

$\Delta p$ : différence entre la pression d'extrusion mesurée en début et en fin d'essai rapportée à la quantité totale de matière extrudée et exprimée en %/kg.

## Exemple 1

### 1. Préparation d'un mélange maître

On mélange pendant 15 minutes, dans un mélangeur à fût une composition contenant :

- 97 % en poids d'un polyamide MXD6 commercialisé sous la marque NYREF 6007 par SOLVAY & Cie
- 3 % en poids de polymère à base de fluorure de vinylidène commercialisé sous la marque SOLEF 11010 par la société SOLVAY & Cie.

Ce mélange maître est ensuite granulé sur une granulatrice BRABENDER (modèle 881202).

### 2. Etude de l'aptitude à la mise en oeuvre de la composition

Ce mélange maître est introduit conjointement avec du polyamide NYREF 6007 dans le dispositif utilisé pour tester les compositions thermoplastiques décrit ci-avant. Le rapport entre le pourcentage en poids de mélange maître et le pourcentage en poids du polyamide est de 4/96. Cette composition selon l'invention, contenant ainsi 0,12 partie en poids de polymère fluoré pour 100 parties en poids de polyamide, est testée suivant la procédure décrite précédemment durant trois heures. La température de la composition à la sortie de l'extrusiomètre est de 260°C. Les différentes mesures relevées durant cet essai sont :

$P_i = 15$
$P_f = 37$
$Q = 4,23$
$\Delta P = 35$

La courbe 1 de la figure unique montre que la pression d'extrusion augmente au cours de l'essai mais que son augmentation diminue avec le temps et donc avec la quantité de matière mise en oeuvre. La pression d'extrusion ayant tendance à se stabiliser, il est possible de mettre en oeuvre une grande quantité de matière sans atteindre la pression critique au delà de laquelle il est nécessaire de procéder à l'arrêt de la mise en oeuvre.

### Exemple 2R

Cet exemple est donné à titre de comparaison.

Une composition constituée uniquement du polyamide de type MXD6 commercialisé sous la marque NYREF 6007 par SOLVAY & Cie est testée selon une procédure en tout point semblable à celle de l'exemple 1. Les résultats de ce test sont :

$P_i = 13$
$P_f = 46$
$Q = 4,25$
$\Delta P = 60$

La courbe 2R (voir figure) montre une augmentation croissante de la pression d'extrusion au cours du temps. Il n'est donc pas possible, avec cette composition, de mettre en oeuvre une grande quantité de matière sans atteindre la pression critique au delà de laquelle il est nécessaire de procéder à l'arrêt de la mise en oeuvre.

## Revendications

1. Compositions de polyamide consistant en :

A) 100 parties en poids de polyamide semi-aromatique choisi parmi les polyamides obtenus par polycondensation de xylylène diamines avec des acides aliphatiques linéaires $\alpha, \omega$-dicarboxyliques contenant de 6 à 12 atomes de carbone,

B) de 0,001 à 5 parties en poids de polymère ou copolymère du fluorure de vinylidène, qui soit fluide lorsque le polyamide est à l'état fondu;

C) jusqu'à 10 parties en poids d'additifs choisis parmi les stabilisants, les colorants, les pigments, les agents antistatiques et les agents de nucléation;

D) et éventuellement de 10 à 80 parties en poids d'agents de renforcement fibreux choisis parmi les fibres de verre, les fibres de carbone et les fibres de carbure métallique.

2. Compositions selon la revendication 1, dans lesquelles le polyamide est obtenu par polycondensation de m-xylylène diamine avec l'acide adipique.

3. Objets façonnés obtenus par moulage de compositions selon l'une quelconque des revendications 1 à 2.

4. Objets selon la revendication 3, façonnés par extrusion, extrusion-soufflage, extrusion-thermoformage ou injection.

**Patentansprüche**

1. Polyamidzusammensetzungen, bestehend aus:

A) 100 Gewichtsteilen semi-aromatischem Polyamid. das unter den Polyamiden ausgewählt ist, die durch Polykondensation von Xylylendiaminen mit linearen aliphatischen $\alpha,\omega$-Dicarbonsäuren, die 6 bis 12 Kohlenstoffatome enthalten, erhalten werden;

B) 0,001 bis 5 Gewichtsteilen Vinylidenfluoridpolymer oder -copolymer, das flüssig sein soll, wenn sich das Polyamid in geschmolzenem Zustand befindet;

C) bis zu 10 Gewichtsteilen Additiven, die unter den Stabilisatoren, Farbstoffen, Pigmenten, Antistatika und Nukleierungsmitteln ausgewählt sind:

D) und gegebenenfalls 10 bis 80 Gewichtsteilen Faserverstärkungsmitteln, die unter den Glasfasern, den Carbonfasern und den Metallcarbidfasern ausgewählt sind.

2. Zusammensetzungen gemäß Anspruch 1, bei denen das Polyamid durch Polykondensation von m-Xylylendiamin mit Adipinsäure erhalten wird.

3. Geformte Gegenstände, die durch Gießen von Zusammensetzungen gemäß einem der Ansprüche 1 bis 2 erhalten werden.

4. Gegenstände gemäß Anspruch 3, die durch Extrusion, Extrusionsblasen, Extrusions-Warmumformen oder Spritzgießen erhalten werden.

**Claims**

1. Polyamide-based compositions consisting of:

A) 100 parts by weight of semi-aromatic polyamide chosen from the polyamides obtained by polycondensation of xylylenediamines with linear $\alpha,\omega$-dicarboxylic aliphatic acids containing from 6 to 12 carbon atoms;

B) from 0.001 to 5 parts by weight of polymer or copolymer of vinylidene fluoride, which is fluid when the polyamide is in the molten state;

C) up to 10 parts by weight of additives chosen from the stabilizers, pigments, dyes, anti-static agents and nucleating agents;

D) and optionally from 10 to 80 parts by weight of fibrous reinforcing agents chosen from glass fibers, carbon fibers and metal carbide fibers.

2. Compositions according to Claim 1, characterised in that the polyamide is obtained by polycondensation of m-xylylenediamine with adipic acid.

3. Shaped articles obtained by moulding compositions according to any one of Claims 1 to 2.

4. Articles according to Claim 3, shaped by extrusion, extrusion blowing, extrusion thermoforming or injection moulding.

EP 0 503 714 B1